# EUROPÄISCHE PATENTSCHRIFT

(11) **EP 1 954 454 B1**
(45) Veröffentlichungstag und Bekanntmachung des Hinweises auf die Patenterteilung: **10.02.2010**
(21) Anmeldenummer: 06819629.4
(22) Anmeldetag: 20.11.2006
(51) Int. Cl.: B25J 17/02, B25J 19/00, F16C 11/10, F16M 11/14, B23K 37/04

(54) **TRAGARM FÜR EIN SPANN- UND ZENTRIERELEMENT EINES GREIFERGERÜSTES ZUM HALTEN VON RAUMFORMBAUTEILEN IN DER KFZ.-INDUSTRIE**
SUPPORT ARM FOR A CLAMPING AND CENTERING ELEMENT OF A GRIPPER FRAME FOR HOLDING THREE-DIMENSIONAL COMPONENTS IN THE MOTOR VEHICLE INDUSTRY
BRAS DE SUPPORT POUR UN ELEMENT DE SERRAGE ET DE CENTRAGE D'UNE STRUCTURE DE PREHENSION DESTINEE A RETENIR DES PIECES A FORME SPATIALE DANS L'INDUSTRIE AUTOMOBILE

(30) Priorität: 29.11.2005 DE 102005056811; 29.11.2005 DE 102005063357
(43) Veröffentlichungstag der Anmeldung: 13.08.2008
(73) Patentinhaber: ThyssenKrupp Drauz Nothelfer GmbH, 74076 Heilbronn (DE)
(72) Erfinder: ARNOLD, Roland, 88289 Waldburg (DE)
(74) Vertreter: Cohausz & Florack
(86) Internationale Anmeldenummer: PCT/EP2006/068679
(87) Internationale Veröffentlichungsnummer: WO 2007/063006

(56) Entgegenhaltungen:
- DE-A1-102004 010 987
- US-A- 5 302 062
- US-A- 5 544 968

## Beschreibung

Die Erfindung betrifft einen Tragarm für ein Spann- und/oder Zentrierelement eines Greifergerüstes zum Halten von Raumformbauteilen, insbesondere in der Kfz.-Industrie, in dem ein mit mindestens einer Kugel verschwenkbar und/oder einem Zylinderzapfen verschieb- und verdrehbar jeweils in einer Klemm- und Löseeinheit gehaltener Verstellmechanismus integriert ist.

Bekannte Greifergerüste zum Halten von Raumformbauteilen beim Herstellen von Kraftfahrzeugkarosserien (US 6 722 842 B1) weisen Spanner und Zentrierstifte auf, die ein positionsgerechtes Halten eines Raumformbauteils ermöglichen. Solche Greifergerüste können mit Handlingsrobotern im Raum bewegt werden, wobei ein von einem Greifergerüst gehaltenes Raumformbauteil zu der Stelle transportiert und hier positionsgerecht gehalten werden kann, wo es an einer Kraftfahrzeugkarosserie angebracht bzw. mit anderen Karosseriebauteilen verbunden werden soll. Da bei einer Karosserie eines Kraftfahrzeuges verschiedene Raumformbauteile zu handlen sind, ist es bekannt, das Greifergerüst bezüglich seiner von Tragarmen gehaltenen Spann- und Zentrierelementen der Geometrie des jeweils zu handlenden Bauteils anzupassen. Dazu ist in jedem Tragarm ein Verstellmechanismus integriert, der in einer Klemm- und Löseeinheit mindestens eine Kugel und einen Zylinderzapfen umfasst, die eine Verschwenkung und eine Verschiebung und Verdrehung der vom Tragarm gehaltenen Spann- und Zentrierelemente erlauben. Die Klemm- und Löseeinheit sowohl für die Kugel als auch den Zylinderzapfen besteht im wesentlichen aus mit Spannbolzen verspannbaren Klemmschellen bzw. Klemmbacken. Dementsprechend erfordert es aufwendige Handarbeit, das Greifergerüst bezüglich seiner Spann- und Zentrierelemente auf die Geometrie eines neuen Bauteils einzurichten.

In der US 5,544,968 ist Tragarm für eine universelle Haltevorrichtung zum Halten von großen konturierten Raumformbauteilen beschrieben. Dieser Tragarm umfasst einen mit einer Kugel verschwenkbar in einer Klemm- und Löseeinheit gehaltenen Verstellmechanismus sowie einen mit einem Zylinderzapfen in einer Klemm- und Löseeinheit gehaltenen axialen Verstellmechanismus. Im Falle der Kugel umgreift die Klemm- und Löseeinheit diese mit Ringklemmen, welche durch einen hydraulischen Verstellmechanismus, der auf axial voneinander weg bzw. aufeinander zu bewegbaren Ringkolben mit konischer Innenfläche basiert, auf die Kugeloberfläche gedrückt werden, ohne ihren Abstand zueinander zu verändern. Neben dem Kugelgelenk offenbart die US 5,544,968 auch einen mit einem Zylinderzapfen verschieb- und verdrehbar jeweils in einer Klemm- und Löseeinheit gehaltenen Verstellmechanismus, bei dem der Zylinderzapfen durch eine Ringklemme umgriffen wird. Die Ringklemme wird durch axial bewegliche, hydraulische Stellmittel in Form eines Ringkolbens mit konischer Innenfläche mit radial gerichteter Druckkraft beaufschlagt. Die hydraulischen Verstellmechanismen weisen jeweils einen Anschluss für eine externe Hydraulikfluidzuführung auf.

In der DE 10 2004 010987 A1 ist eine Sicherungseinheit zur lösbaren Klemmung eines axial verschiebbaren und verdrehbaren zylindrischen Stabes beschrieben. Die Sicherungseinheit umfasst zwei ringförmig um den Stab angeordnete Kammern, welche beispielsweise mit einem Hydrauliköl gefüllt sein können und bei Druckbeaufschlagung durch einen hydraulischen Krafterzeuger ihre Form derart elastisch ändern, dass ein Kraftübertragungselement in Richtung auf den zylindrischen Stab zu oder von diesem wegbewegt wird. Bei dem Kraftübertragungselement handelt es sich um eine axial geschlitzte Hülse, deren gegenüberliegende Bereiche sich bei radialer Druckbeaufschlagung durch die Ringkammern aufeinander zu bewegen, wodurch sich der Axialschlitz schließt und der zylindrische Stab eingeklemmt wird. Zum Zwecke der Zuführung von Hydraulikfluid, weist die Sicherungseinheit schließlich einen Anschluss für eine externe Hydraulikleitung auf.

Der Erfindung liegt die Aufgabe zugrunde, einen Tragarm für ein Spann- und/oder Zentrierelement eines Greifergerüstes zum Halten von Raumformteilen der eingangs genannten Art zu schaffen, das bei einem Greifergerüst auf einfache Art und Weise das Einstellen auf unterschiedliche Geometrien von Raumformbauteilen ermöglicht.

Diese Aufgabe wird erfindungsgemäß mit einem Tragarm gemäß Patentanspruch 1 gelöst.

Bei einem mit dem erfindungsgemäßen Tragarm bestückten Greifergerüst lässt sich die Einrichtung der von Tragarmen gehaltenen Spann- und/oder Zentrierelemente bei einem Wechsel von einem Raumformbauteil auf ein Raumformbauteil mit anderer Geometrie ohne aufwendige Montagearbeiten, wie Lösen von Schraubenlzen an Klemmschellen, Klemmbacken und dergleichen,einfach dadurch erledigen, dass zunächst die Klemmbacken von dem hydraulischen Krafterzeuger druckentlastet werden. Dann können die Spann- und Zentrierelemente in die gewünschte Position bewegt werden, wo sie durch erneute Druckbeaufschlagung der Krafterzeuger fixiert werden. Bei einer Kugel ermöglichen die gelösten Klemmbacken nicht nur eine Verdrehung, sondern auch eine Verschwenkung um deren Zentrum, während die Klemmbacken bei einem Zylinderzapfen die Verdrehung des Zylinderzapfens um seine Achse, aber auch seine Verschiebung in Achsrichtung ermöglichen. Unter Klemmbacken werden nicht nur Segmente, sondern auch Ringe und geschlitzte Hülsen verstanden. Welche spezielle Ausführung die Klemmbacken haben können, hängt im wesentlichen vom zu klemmenden Bauteil "Kugel" oder "Zapfen" ab.

Gemäß der Erfindung wird der hydraulische Druck von einem im Tragarm integrierten Druckerzeuger aufgebracht. Bei mehreren Verstellmechanismen mit hydraulischen Krafterzeugern werden vorzugsweise alle Krafterzeuger von demselben Druckerzeuger versorgt.

Im folgenden wird die Erfindung anhand einer verschiedene Ausführungsbeispiele darstellenden Zeichnung näher erläutert. Im einzelnen zeigen:
- Fig. 1: einen Tragarm für ein Spannelement mit zwei Kugelgelenke und einem Längsauszug in schematischer Darstellung in Seitenansicht,
- Fig. 2: eine Klemm- und Löseeinheit eins Kugelgelenks im Axialschnitt,
- Fig. 3: einen im Prinzip mit der Ausführung der Fig. 1 übereinstimmenden Tragarm mit zwei Kugelgelenken und einem Längsauszug unter Verwendung von Klemm- und Löseeinheiten des Ausführungsbeispiels der Fig. 2 im Axialschnitt und
- Fig. 4: den Tragarm der Fig. 3 in leicht abgewandelter Ausführung im Axialschnitt.

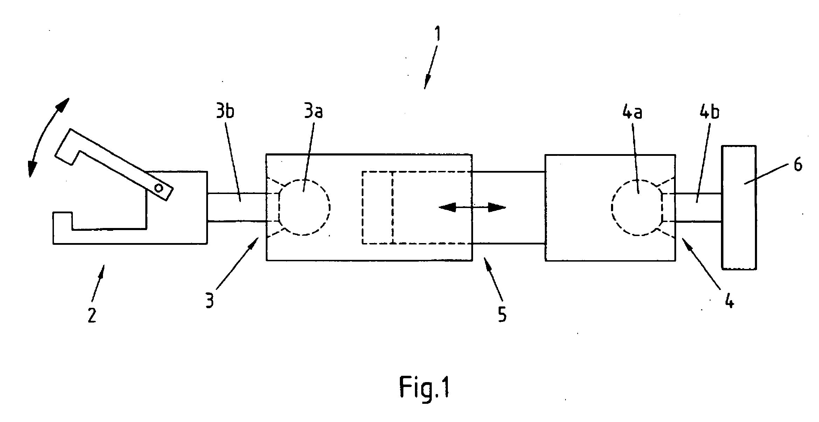

Der in Fig. 1 dargestellte Tragarm 1 für ein Spannelement 2 umfasst zwei Kugelgelenkverbindungen 3, 4 und einen dazwischen angeordneten Längsauszug 5. Das Spannelememt 2 wird von einem an der Kugel 3a des Kugelgelenkes 3 angeformten Zapfen 3b getragen. Ein an der Kugel 4a des Kugelgelenkes 4 angeformter Zapfen 4b trägt einen Befestigungsflansch 6, mit dem der Tragarm 1 auf einer nicht dargestellten Konsole eines Greifergerüstes befestigbar ist. Den Kugelgelenken 3, 4 und dem Längsauszug 5 sind noch im einzelnen zu beschreibende Klemm- und Löseeinheiten zugeordnet, die es ermöglichen, dass bei gelöster Klemm- und Löseeinheit das Spannelement 2 gegenüber dem Befestigungsflansch 6 von einer Position im Raum an eine andere Position im Raum bewegt und hier fixiert werden kann. Dabei ermöglichen die Kugelgelenke 3, 4 eine Dreh- und Verschwenkbewegung.

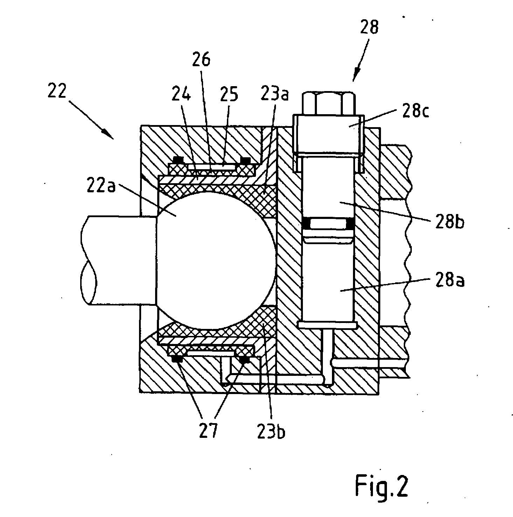

Beim Ausführungsbeispiel der Fig. 2 ist dem Kugelgelenk 22 eine Klemm- und Löseeinheit zugeordnet, bei der die Kugel 22a im Bereich ihres größten Durchmessers von mehreren dreh- und axial fest, aber radial beweglichen Klemmbacken 23a, 23b eingefasst ist, die als kalottenförmige Segmente ausgestaltet sind. Die Klemmbacken 23a, 23b sind von einer zumindest im mittleren Bereich der Kugel 22a axial geschlitzten, flexiblen Ringhülse 24 umgeben. Ein die Ringhülse 24 umgebender Druckraum 25 wird auf der Seite der Ringhülse 24 radial von einer geschlossenen, elastischen Hülse 26 und axial von O-Ringdichtungen 27 abgeschlossen. Der Druckraum 25 ist von einem Druckerzeuger 28 mit einer Druckflüssigkeit beaufschlagbar. Der Druckerzeuger 28 besteht aus einem Zylinderraum 28a und einem Stellkolben 28b, der an einer Schraube 28c abgestützt ist. Durch Einschrauben der Schraube 28c wird Druck aufgebaut, und durch Herausschrauben der Schraube 28c abgebaut. Damit wird im ersten Fall die Klemm- und Löseeinheit festgesetzt und im zweiten Fall gelöst.

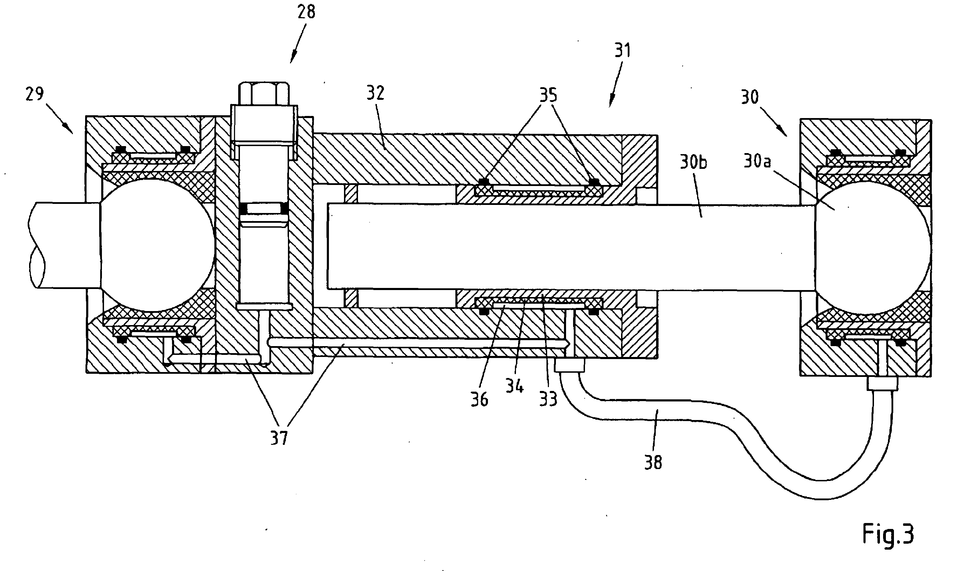

Beim Ausführungsbeispiel eines Arms mit zwei Kugelgelenken 29, 30 und einem Längsauszug 31 gemäß Fig. 3 haben die Klemm- und Löseeinheiten der Kugelgelenke 29, 30 den gleichen Aufbau wie beim Ausführungsbeispiel der Fig. 2, während die Klemm- und Löseeinheit des Längsauszuges 31 nur im Prinzip gleich aufgebaut ist wie die des Kugelgelenkes 22 der Fig. 2. Der Unterschied beim Längsauszug 31 besteht zum einen in der Raumform und zum anderen in der Zusammenfassung von Klemmbacken und einfassender Hülse zu einem Bauteil. So ist der Zylinderzapfen 30b von einem Klemmbacken 33 umgeben, der als axial und drehfest im Gehäuse 32 gehaltene, elastische und zumindest teilweise axial geschlitzte Klemmhülse gebildet ist. Dieser Klemmbacken/Klemmhülsc 33 kann über eine flexible Hülse 34 radial mit Druck beaufschlagt werden. Dieser Druck kann in einem von der Hülse 34 und seitlich von O-Ringdichtungen 35 abgedichteten Ringraum 36 hydraulisch aufgebaut werden. Der hydraulische Druck wird von dem schon beschriebenen gemeinsamen Druckerzeuger 28 über ein Leitungssystem 37, 38 dem Ringraum 36 und den anderen Ringräumen zugeführt.

So wie es möglich wäre, die Klemmbacken und die Hülse der Kugelgelenke 29, 30 zu einem Bauteil zusammenzufassen, wäre es umgekehrt auch möglich, die Klemmhülse 33 beim Längsauszug 31 zweiteilig auszuführen.

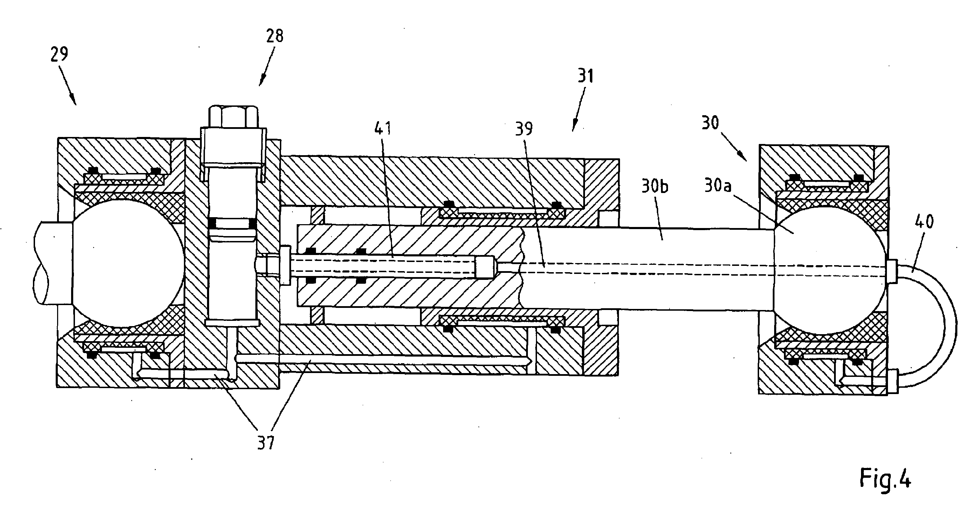

Das Ausführungsbeispiel der Fig. 4 entspricht im Prinzip dem der Fig. 3. Der einzige Unterschied besteht darin, dass anstelle der äußeren Leitung 38 des Ausführungsbeispiels der Fig. 3 eine integrierte Leitung 39 und eine äußerte Umleitung 40 vorgesehen sind. Die integrierte Leitung 39 verläuft durch den axial beweglichen Zylinderzapfen 30b und einen teleskopartig in diesen Zylinderzapfen 30b eintauchenden axial festen Rohrkanal 41.

## Patentansprüche

1. Tragarm für ein Spann- und/oder Zentrierelement (2) eines Greifergerüstes zum Halten von Raumformbauteilen, insbesondere in der Kfz.-Industrie, in dem ein mit mindestens einer Kugel (3a, 4a, 22a, 30a) verschwenkbar und/oder einem Zylinderzapfen (30b) verschieb- und verdrehbar jeweils in einer Klemm- und Löseeinheit gehaltener Verstellmechanismus (21a, 21b, 23a-28c, 33-40) integriert ist, wobei die Klemm- und Löseeinheit die Kugel (3a, 4a, 22a, 30a) und/oder den Zylinderzapfen (30b) mit radial spannbaren Klemmbacken (23a, 23b, 33) umgreift, die als an gegenüberliegenden Hälften der Kugel (3a, 4a, 22a, 30a) oder des Zylinderzapfens (30b) und im Bereich einander gegenüberliegender Scheitelpunkte der Kugel (3a, 4a, 22a, 30a) bzw. des Zylinderzapfens (30b) angreifende Schalen ausgestaltet sind, deren Abstand durch Stellmittel (24-28, 34-38) einstellbar ist, wobei die Klemmbacken (23a, 23b, 33) von einem ringförmig um sie herum angeordneten mit hydraulischem Druck betreibbaren Krafterzeuger (25-27, 34-36) mit radial gerichteter Druckkraft beaufschlagbar sind" wobei der hydraulische Druck von einem im Tragarm (1) integrierten Druckerzeuger (28) aufgebracht wird.

2. Tragarm nach Anspruch 1, **dadurch gekennzeichnet, dass** bei mehreren Verstellmechanismen mit hydraulischen Krafterzeugern (25-27, 34-36) alle Krafterzeuger von demselben Druckerzeuger (28) versorgt werden.

## Claims

1. A support arm for a clamping and/or centering element (2) of a gripper frame for holding three-dimensional formed components, particularly in the automobile industry, wherein an adjusting mechanism (21a, 21b, 23a-28c, 33-40) that is respectively held in a clamping and releasing unit in a pivotable fashion by means of at least one ball (3a, 4a, 22a, 30a) and/or in a displaceable and rotatable fashion by means of a cylindrical pin (30b) is integrated into said support arm, wherein the clamping and releasing unit encompasses the ball (3a, 4a, 22a, 30a) and/or the cylindrical pin (30b) with radially tensible clamping jaws (23a, 23b, 33) realized in the form of shells that respectively engage on opposite halves of the ball (3a, 4a, 22a, 30a) or the cylindrical pin (30b) and in the region of opposing summits of the ball (3a, 4a, 22a, 30a) or the cylindrical pin (30b), wherein the spacing between said shells can be adjusted with adjusting means (24-28, 34-38), wherein the clamping jaws (23a, 23b, 33) can be subjected to a radially directed compressive force by a force generator (25-27, 34-36) that is annularly arranged around the clamping jaws and operates with hydraulic pressure, and wherein the hydraulic pressure is generated by a pressure generator (28) that is integrated into the support arm (1).

2. The support arm according to Claim 1, **characterized in that** all force generators are supplied by the same pressure generator (28) if several adjusting mechanisms with hydraulic force generators (25-27, 34-36) are provided.

## Revendications

1. Bras de support pour un élément de serrage et / ou de centrage (2) d'une structure de préhension, destiné à retenir des pièces préformées spatiales, en particulier pour l'industrie automobile, dans lequel est intégré un mécanisme de déplacement (21a, 21b, 23a - 28c, 33 - 40), qui, pouvant être pivoté, avec au moins un corps sphérique (3a, 4a, 22a, 30a) et / ou poussé et tourné avec un tourillon cylindrique (30b), est respectivement maintenu dans une unité de serrage et de desserrage, l'unité de serrage et de desserrage saisissant les corps sphériques (3a, 4a, 22a, 30a) et / ou le tourillon cylindrique (30b) au moyen de mâchoires de serrage (23a, 23b, 33), pouvant être serrées radialement, qui, conçues en forme de coquilles, attaquent les moitiés opposées des corps sphériques (3a, 4a, 22a, 30a) et / ou du tourillon cylindrique (30b), dans la région de sommets opposés des corps sphériques (3a, 4a, 22a, 30a), respectivement du tourillon cylindrique (30b), et dont l'intervalle peut être réglé par des moyens de réglage (24 - 28, 34 - 38), les mâchoires de serrage (23a, 23b, 33) étant soumises à l'influence d'un générateur d'énergie (25 - 27, 34 - 36), commandé par pression hydraulique, qui les entourent à la manière d'un anneau, la pression hydraulique étant appliquée par un générateur de pression (38) intégré dans le bras de support (1).

2. Bras de support selon la revendication 1, **caractérisé en ce que**, quand sont prévus plusieurs mécanismes de déplacement avec des générateurs d'énergie hydrauliques (25 - 27, 34 - 36), tous les générateurs d'énergie sont alimentés par le même générateur de pression (28).
